**Europäisches Patentamt**

**European Patent Office**

**Office européen des brevets**

(19)

(11) Veröffentlichungsnummer: **0 008 639**
**B1**

(12) **EUROPÄISCHE PATENTSCHRIFT**

(45) Veröffentlichungstag der Patentschrift: **26.05.82**

(51) Int. Cl.³: **F 21 P 5/02, G 02 B 27/10**

(21) Anmeldenummer: **79102404.5**

(22) Anmeldetag: **12.07.79**

(54) **Lichtquellenanordnung für Theater- oder Studiobeleuchtung od. dgl.**

(30) Priorität: **11.09.78 DE 2839823**

(43) Veröffentlichungstag der Anmeldung:
**19.03.80 Patentblatt 80/6**

(45) Bekanntmachung des Hinweises auf die Patenterteilung:
**26.05.82 Patentblatt 82/21**

(84) Benannte Vertragsstaaten:
**AT BE CH DE FR GB IT LU NL SE**

(56) Entgegenhaltungen:
**DE - A - 2 017 084**
**GB - A - 460 335**
**US - A - 3 318 185**
**US - A - 3 818 216**
**US - A - 4 048 493**
**US - A - 4 071 809**

(73) Patentinhaber: **Reiche & Vogel Leuchtkunst**
**Zweigniederlassung der H.M. Wörwag GmbH**
**Blumenstrasse 10**
**D-1000 Berlin 20 (DE)**

(72) Erfinder: **Wörwag, Hans Michael**
**Gasteiner Strasse 14**
**D-1000 Berlin 31 (DE)**

(74) Vertreter: **Wolgast, Rudolf, Dr. et al,**
**Bökenbusch 41 Postfach 11 03 86**
**D-5620 Velbert 11 Langenberg (DE)**

Courier Press, Leamington Spa, England.

## Lichtquellenanordnung für Theater- oder Studiobeleuchtung od.dgl.

Die Erfindung betrifft eine Lichtquellenanordnung nach dem Oberbegriff des Patentanspruchs 1.

Wenn in einem Theater oder Studio farbiges Licht benötigt wird, dann werden in den Strahlengang des Scheinwerfers Farbglasscheiben oder Farbfolien eingesteckt. Farbscheiben haben den Nachteil, daß nur wenige Farben zur Verfügung stehen und diese von Fertigung zu Fertigung unterschiedlich ausfallen. Die Betriebszeit von Folien ist dagegen wergen der Hitzeentwicklung begrenzt. In beiden Fällen müssen die Farbscheiben oder Farbfolien manuell oder mittels aufwendiger Vorrichtungen (Farbwechslergeräte) während des Betriebes gewechselt werden, um verschiedenfarbiges Licht zu erhalten.

Durch die US—A 3 818 216 ist eine Lampenanordnung mit Farbmischung bekannt, bei welcher im Strahlengang eines von einer einzigen Lichtquelle ausgehenden Lichtbündels unter 45° zur Achse dieses Lichtbündels geneigt drei dichroitische Filter angeordnet sind, von denen das erste Filter blaues Licht, das zweite Filter blaues und grünes Licht und das dritte Filter nur rotes Licht reflektiert, wobei die Filter die jeweils anderen dieser drei Wellenlängenbereiche durchlassen. Die so senkrecht zu dem ursprünglichen Lichtbündel verlaufenden, reflektierten Teillichtbündel enthalten dann jeweils nur blaues, grünes bzw. rotes Licht. Diese Teillichtbündel werden dann durch Spiegel bzw. teildurchlässige Spiegel wieder um 90° umgelenkt und zu einem Ausgangsbündel überlagert. Jedes der Teillichtbündel enthält einen einstellbaren Graukeil, so daß die Intensitäten der Teillichtbündel zur Erzeugung der gewünschten Mischfarbe einzeln eingestellt werden können. In jedem der drei Teillichtbündel ist eine Linse angeordnet. Eine vor der Lichtquelle vorgesehene Linse bildet die Lichtquelle auf jede dieser in den Teillichtbündeln angeordneten Linsen ab. Auf diese Weise sind die dichroitischen Filter im konvergenten Strahlengang angeordnet, was zu Farbverschiebungen an den Rändern der Teillichtbündel führt. Diese Farbverschiebungen werden durch Verwendung einer Wabenlinse im Ausgangslichtbündel wieder herausgemittelt.

Bei dieser bekannten Beleuchtungsanordnung muß die Einstellung relativ aufwendig mittels verstellbarer Graukeile erfolgen.

Bei einer Verstellung der Lampenhelligkeit verändert sich mit der Leistung auch die Spektralverteilung des ausgesandten Lichts, so daß mit einer Verstellung der Helligkeit bei gleicher Einstellung der Graukeile auch eine Veränderung der Mischfarbe verbunden ist.

Die US—A 4 071 809 zeigt eine Vorrichtung zur additiven Farbsynthese, bei welcher mehrere Lichtquellen vorgesehen sind, von denen je ein Lichtbündel durch ein Farbfilter geleitet wird. Dabei ist ein Farbfilter für Grün, ein Farbfilter für Rot und ein Farbfilter für Blau durchlässig. Die so gefilterten Lichtbündel werden mittels zweier zur Bündelachse geneigter dichroitischer Filter zu einem Ausgangslichtbündel überlagert. Dabei reflektiert das eine dichroitische Filter nur Rot und das andere dichroitische Filter nur Blau. Um die Lampenhelligkeiten ohne Veränderung ihrer spektralen Verteilungen verändern zu können, sind die Lampen als Impulslichtquellen ausgebildet, wobei die Amplituden oder die Frequenz der Lichtblitze digital gesteuert veränderbar sind.

Solche Impulslichtquellen sind aufwendig. Sie liefern keine kontinuierliche sondern eine intermittierende Beleuchtung. Die Farbmischung findet erst im Auge des Betrachters statt. Eine solche intermittierende Beleuchtung ist für viele Zwecke, z.B. auch für Fernsehaufnahmen, ungeeignet.

Durch die US—A 4 048 493 ist ein Farbprojektor bekannt, welcher die Erzeugung definierter Mischfarben gestattet. Dabei wird ein von einer Halogenlampe als weißer Lichtquelle ausgehendes Lichtbündel durch eine Kondensorlinse auf die Apertur eine Aperturblende geleitet. Hinter der Aperturblende sitzt ein Filterrad, das mit zwei verschiedenfarbigen Filtersektoren zwei Bereiche der Apertur überdeckt, während in einem dritten Bereich weißes Licht durchtritt. Durch getrennt voneinander steuerbare Blenden können die farbigen Filtersektoren und das durchtretende weiße Licht mehr oder weniger stark abgedeckt werden. Das so erhaltene Lichtbündel wird durch eine weitere Kondensorlinse auf eine mit Durchbrüchen versehene Maske geleitet, die ihrerseits durch ein Projektionsobjektiv reell abgebildet wird. Die Blenden sind über Stellmotore durch einen photoelektrischen Detektor steuerbar, der in Strahlenrichtung hinter der Aperturblende und dem Filterrad angeordnet und wahlweise vor jeden der farbigen Filtersektoren oder den dritten Bereich bewegbar ist. Dabei werden die Detektorsignale über die Stellmotoren und die Blenden auf vorherberechnete, einer gewünschten Farbe entsprechende Werte geregelt.

Auch bei dieser bekannten Anordnung ist, ähnlich wie bei der US—A 3 818 216 nur eine einzige Lichtquelle vorgesehen, so daß der Farbabgleich mittels verstellbarer Blenden erfolgen muß. Das ist aufwendig und relativ langsam. Es ist nicht vorgesehen, die Gesamthelligkeit des erzeugten farbigen Lichtbündels bei Aufrechterhaltung seiner Farbe zu verändern. Für Theater- oder Studiobeleuchtung wäre eine solche Anordnung nicht geeignet.

Der Erfindung liegt die Aufgabe zugrunde, eine Lichtquellenanordnung der eingangs definierten Art so auszubilden, daß bei Vermeidung pulsierender Beleuchtung eine schnelle stufenlose Einstellung jeder beliebigen Farbe möglich ist.

Erfindungsgemäß wird diese Aufgabe durch die im Kennzeichen des Patentanspruchs 1 aufgeführten Maßnahmen gelöst.

Im Gegensatz zu der US—A 4 071 809 kann die Lichtquellenanordnung mit zeitlich kontinuierliche leuchtenden, stetig regelbaren Lichtquellen arbeiten. Die Filterung erfolgt ohne absorbierende Farbfilter. Im Gegensatz zu der US—A 3 818 216 und der US—A 4 048 493 sind bei der erfingungsgemäßen Lichtquellenanordnung für jedes Lichtbündel eine gesonderte Lichtquelle vorgesehen. Das gestattet eine schnelle elektrische Einstellung der Mischfarbe und vermeidet aufwendige und langsame Graukeiloder Blendenanordnungen. Dabei wird die Helligkeit jeder Lichtquelle photoelektrische überwacht, so daß die Intensitäten der einzelnen Teillichtbündel in definierten, durch die Sollwerte vorgegebenen verhältnissen zueinander stehen, und zwar unbeeinflußt von Veränderungen der Spektralverteilung der Lichtquellen, die bei der Anordnung nach der US—A 3 818 216 die Mischfarbe beeinflußt. Eine Veränderung der Gesamthelligkeit des Ausgangslichtbündels wird durch eine gemeinsame Veränderung aller Sollwerte erreicht, ohne daß dies am Verhältnis der Intensitäten und damit an der Mischfarbe etwas ändert.

Die gefilterten Teillichtbündel werden—ähnlich wie bei der US—A 3 818 216—durch dichroitische Filter erhalten, so daß die Farbfilter nicht durch Absorption bei hohen Intensitäten unzulässig erwärmt werden. Es geht kein Nutzlicht durch Strahlenteilung an teildurchlässigen Spiegeln verloren.

Weitere Ausgestaltungen der Erfindung sind Gegenstand der Unteransprüche.

Die Erfindung ist nachstehend an einem Ausführungsbeispiel unter Bezugnahme auf die zugehörigen Zeichnungen näher erläutert:

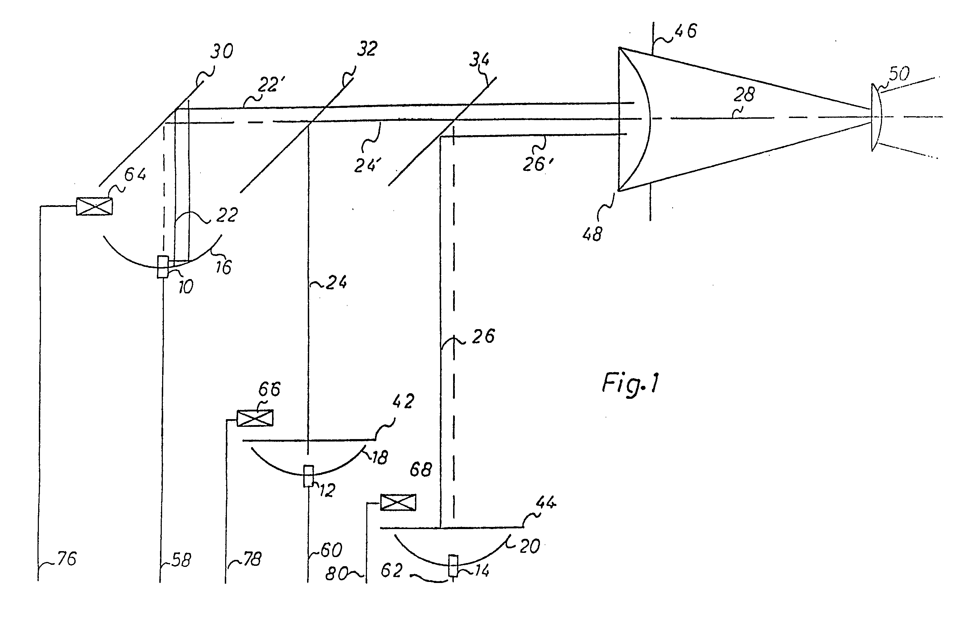

Fig. 1 zeigt den optischen Aufbau einer Lichtquellenanordnung nach der Erfindung.

Fig. 2 die sich an Fig. 1 anschließt, zeigt die Steuerung der Lichtquellen.

Fig. 3 zeigt die Charakteristiken der verschiedenen bei der Lichtquellenanordnung nach Fig. 1 verwandten Filter.

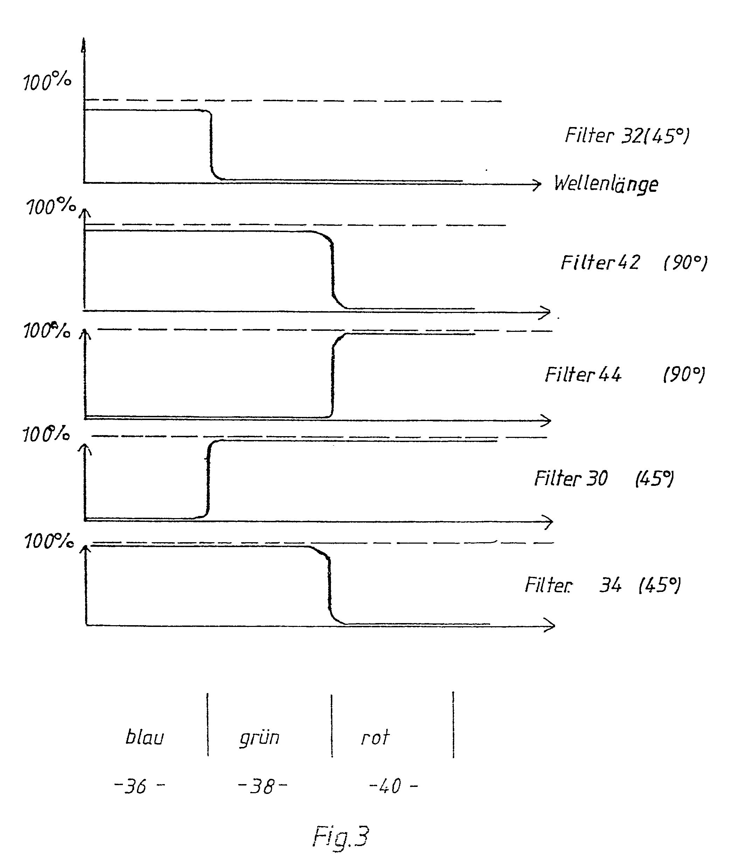

Die Lichtquellenanordnung enthält eine erste Lichtquelle 10, eine zweite Lichtquelle 12 und dine dritte Lichtquelle 14. Hinter jeder der Lichtquellen 10, 12, 14 ist ein Reflektor 16 bzw. 18 bzw. 20 angeordnet, der ein im wesentlichen paralleles erstes bzw. zweites bzw. drittes Lichtbündel 22, 24 bzw. 26 erzeugt. Die drei Lichtbündel 22, 24 und 26 verlaufen senkrecht zur optischen Achse 28 des Scheinwerfers und vorzugsweise parallel zueinander. Je ein zugeordnetes dichroitisches Filter 30, 32, 34 ist auf der optischen Achse 28 des Scheinwerfers und unter 45° zu dieser in dem Strahlengang je eines der Lichtbündel 22, 24, 26 angeordnet und lenkt Teile der Lichtbündel um 90° in die Richtung der optischen Achse 28 um, wobei jedes an einem Filter 30, 32 reflektierte Teilbündel durch die austrittsseitig davon angeordneten Filter hindurchtritt. Das an dem Filter 32 reflektierte Teilbündel 22' tritt durch die Filter 32 und 34 hindurch. Das an dem Filter 32 reflektierte Teilbündel 24' tritt durch das Filter 34 hindurch. Die Filter definieren, wie aus Fig. 3 ersichtlich ist, einen Wellenlängenbereich 36 zu einem Ende des sichtbaren Spektrums hin, einen mittleren Wellenlängenbereich 38 und einen Wellenlängenbereich 40 zum anderen Ende des sichtbaren Spektrums hin. Bei den beschriebenen Ausführungsbeispielen sind diese drei Bereiche den Farben blau, grün und rot zugeordnet. Das vom zu beleuchtenden Objekt her gesehen rückwärtige Filter 30 reflektiert den Wellenlängenbereich 36 und läßt die beiden anderen Wellenlängenbereiche 38 und 40 durch, wie in Fig. 3 dargestellt ist. Das mittlere Filter 32 läßt den Wellenlängenbereich 36 durch und reflektiert die Wellenlängenbereiche 38 und 40. Das austrittsseitige Filter 34 läßt die Wellenlängenbereiche 36 und 38 durch und reflektiert den Wellenlängenbereich 40. Im Strahlengang des zweiten, auf das Filter 32 fallenden Lichtbündels 24 ist senkrecht zur Bündelachse ein weiteres dichroitisches Filter 42 angeordnet, welches die Wellenlängenbereiche 36, 38 durchläßt und den Wellenlängenbereich 40 nicht durchläßt. Im Strahlengang des dritten, auf das Filter 34 fallenden Lichtbündels 26 ist senkrecht zur Bündelachse ein weiteres dichroitisches Filter 44 angeordnet, welches die Wellenlängenbereiche 36, 38 nicht durchläßt und dafür den Wellenlängenbereich 40 durchläßt. Auf der optischen Achse 28 des Scheinwerfers ist austrittsseitig von den Filtern 30, 32, 34 eine Blende 46 vorgesehen. Die Lichtquellen 10, 12, 14 sind so gestaffelt angeordnet, daß die Lichtwege zwischen jeder der drei Lichtquellen 10, 12, 14 und der Blende 36 gleich sind. Zwischen den Filtern 30, 32, 34 und der Blende 46 ist eine Kondensorlinse 48 angeordnet. Eine Linse 50 bildet einen Teil des Scheinwerfers.

Die beschriebene Anordnung wirkt wie folgt: Durch das Filter 30 wird von dem Licht der Lichtquelle 10 nur der Blauanteil im Wellenlängenbereich 36 reflektiert, während der Grün- und Rotanteil in den Wellenlängenbereichen 38 und 40 durchgelassen wird. Das Teilbündel 22' enthält somit nur Licht aus dem Wellenlängenbereich 36. Wie aus Fig. 3 ersichtlich ist, wird dieses Licht sowohl von dem Filter 32 als auch von dem Filter 34 durchgelassen.

Von dem Licht der Lichtquelle 12 wird durch das Filter 42 der Rotanteil, d.h. der Wellenlängenbereich 40, ausgeblendet. Das Lichtbündel 24' enthält somit nur noch blaues und grünes Licht aus den Wellenlängenbereichen 36 und 38. Das Filter 32 läßt das blaue Licht aus dem Wellenlängenbereich 36 durch, so daß nur das grüne Licht aus dem Wellenlängenbereich 38 an dem Filter 32 in Richtung der optischen Achse 28 reflektiert wird. Das Licht aus dem Wellenlängenbereich 38 im Teilbündel 24' tritt durch das Filter 34 hindurch.

Von dem Licht der Lichtquelle 14 wird durch das Filter 44 der Blau- und Grünanteil aus den Wellenlängenbereichen 36 und 38 ausgeblendet. Das dritte Lichtbündel 26 enthält daher nur noch rotes Licht aus dem Wellenlängenbereich 40. Dieses Licht wird an dem Filter 34 reflektiert. Auf die Öffnung der Blende 36 fällt daher Licht, welches die drei Primärfarben Blau, Grün und Rot enthält, wobei jede der drei Lichtquellen 10, 12 und 14 den Anteil einer dieser Primärfarben am Nutzlichtbündel und nur diesen bestimmt. Durch Regelung der relativen Helligkeiten der drei Lichtquellen 10, 12 und 14 kann somit die Mischfarbe bestimmt und im gewünschten Maße verändert werden.

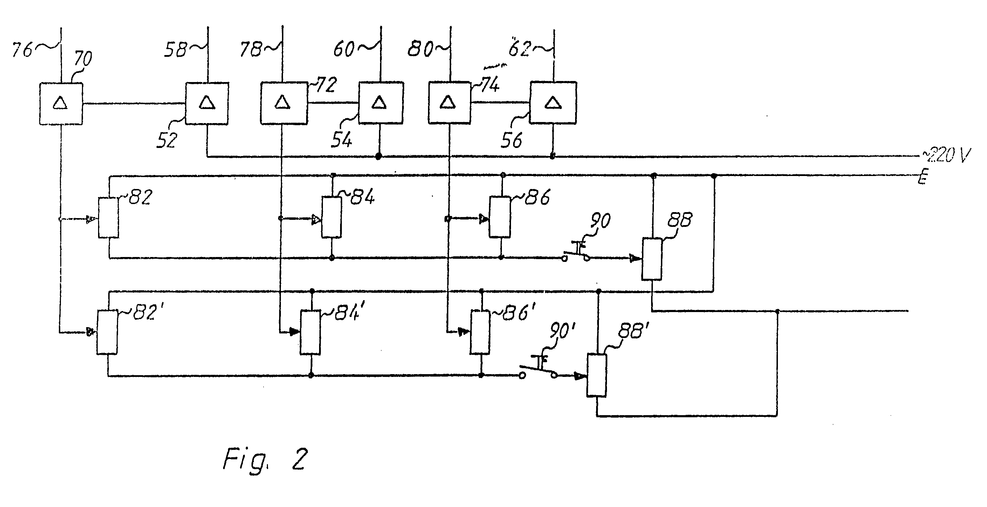

Die Regelung der Helligkeiten der Lichtquellen 10, 12 und 14 erfolgt durch die in Fig. 2 dargestellte Schaltung.

Die Schaltung enthält je einen Leistungssteuerteil 52, 54 bzw. 56 für jede der Lampen 10, 12, 14. Die Lampe 10 ist über eine Leitung 58 mit dem zugehörigen Leistungssteuerteil 52 verbunden, die Lampe 12 ist über eine Leitung 60 mit dem zugehörigen Leistungssteuerteil 54 verbunden und die Lampe 14 ist über eine Leitung 62 mit dem zugehörigen Leistungssteuerteil 56 verbunden. Im Strahlengang jedes der Lichtbündel 22, 24 und 26 ist ein photoelektrischer Fühler 64, 66 bzw. 68 zur Messung der Lichtquellenhelligkeit angeordnet. Jeder Lichtquelle 10, 12, 14 ist ein Regler 70, 72, 74 zugeordnet. Dem Regler 70 wird das Signal des Fühlers 64 über Leitung 76 zugeführt. Dem Regler 72 wird das Signal des Fühlers 66 über eine Leitung 78 zugeführt. Dem Regler 74 wird das Signal des Fühlers 68 über eine Leitung 80 zugeführt. Jeder der Regler 70, 72, 74 vergleicht das Signal des Fühlers 64, 66 bzw. 68 mit einem Sollwertsignal von einem Sollwertgeber 82, 84, 86. Der Leistungssteuerteil 52, 54, 56 ist von dem Regler 70, 72 bzw. 74 ansteuerbar. Die Fühler 66 und 68 sind austrittsseitig von den weiteren dichroitischen Filtern 42 und 44 im Strahlengang des zweiten und dritten Lichtbündels 24, 26 angeordnet.

Auf diese Weise wird der Einfluß der Filter 42 und 44 auf die Helligkeit der Lichtbündel schon berücksichtigt. Die Sollwertgeber 82, 84, 86 sind von einstellbaren Potentiometern gebildet, welche an einer gemeinsamen Speisespannung liegen. Die Speisespannung ist ihrerseits einstellbar. Das geschieht bei der dargestellten Ausführung dadurch, daß die Speisespannung für die Potentiometer an einem einstellbaren Potentiometer 88 abgegriffen wird.

Vorzugsweise sind mehrere Sätze von Sollwertgebern 82, 84, 86; 82', 84', 86'... vorgesehen. An jedem Regler 70, 72, 74 liegt parallel je ein Sollwertgeber von jedem dieser Sätze an. Über Umschaltmittel, z.B. Schalter 90, 90', ist wahlweise jeweils einer dieser Sätze von Sollwertgebern einschaltbar. Auf diese Weise ist es möglich, bestimmte Mischfarben fest einzustellen und dann nach Bedarf durch Betätigung der Umschaltmittel 90, 90' einzuschalten.

## Patentansprüche

1. Lichtquellenanordnung an einem Scheinwerfer zum Erzeugen von farbigem Licht, insbesondere für Theater- oder Studiobeleuchtung, wobei die Farbe des Lichts stetig veränderbar ist, bei welcher
(a) drei überlagerte Lichtbündel (22, 24, 26) mit einem kurzwelligen (blauen), einem mittleren (grünen) und einem langwelligen (roten) Wellenlängenbereich erzeugt werden.
(b) jedes Lichtbündel (22, 24, 26) von einer gesonderten, regelbaren Lichtquelle (10, 12, 14) ausgeht,
(c) zur Überlagerung der Lichtbündel (22, 24, 26) zwei dichroitische Filter (32, 34) vorgesehen sind,

($c_1$) die geneigt zu den Bündelachsen angeordnet sind und
($c_2$) deren Grenzwellenlängen der Grenze zwischen dem kurzwelligen und dem mittleren bzw. zwischen dem mittleren und dem langwelligen Wellenlängenbereich entsprechen, und

(d) ein erstes Lichtbündel (22) durch beide dichroitische Filter (32, 34) hindurchtritt und das zweite und dritte Lichtbündel (24, 26) von je einem der dichroitischen Filter (32 bzw. 34) reflektiert werden, dadurch gekennzeichnet, daß
(e) die Lichtquellen (10, 12, 14) kontinuierlich leuchtend sind,
(f) die Intensität jedes Lichtbündels (22, 24, 26) durch einen photoelektrischen Fühler (64, 66, 68) überwacht ist,
(h) zur Regelung der Lichtquellen (10, 12, 14) je ein Regler (70, 72, 74) vorgesehen ist, durch welchen das Signal des photoelektrischen Fühlers (64, 66, 68) mit einem einstellbaren Sollwert verglichen und in Abhängigkeit vom Ergebnis dieses Vergleichs die Leistung der Lichtquelle (10, 12, 14) geregelt wird und
(i) die einstellbaren Sollwerte aller Lichtquellen (10, 12, 14) zur Einstellung der Gesamtintensität des austretenden Lichtbündels gemeinsam im gleichen Verhältnis veränderbar sind.

2. Lichtquellenanordnung nach Anspruch 1, dadurch gekennzeichnet, daß
(a) das vom beleuchteten Objekt her gesehen vordere Filter (34) nur den langwelligen (40) und das dahinterliegende Filter (32) den mittleren (38) und den langwelligen Wellenlängenbereich (40) reflektiert und
(b) das durch diese beiden Filter (32, 34) hindurchtretende Lichtbündel (22, 22') an einem dritten dichroitischen Filter (30) reflektiert wird, welches nur den kurzwelligen Wellenlängenbereich (36) reflektiert.

3. Lichtquellenanordnung nach Anspruch 2, dadurch gekennzeichnet, daß

(a) im Strahlengang des zweiten Lichtbündels (24) zwischen Lichtquelle (12) und erstem dichroitischen Filter (32) ein viertes dichroitisches Filter (42) angeordnet ist, welches den mittleren (38) und den kurzwelligen Wellenlängenbereich (36) durchläßt und den langwelligen Wellenlängenbereich (40) reflektiert,

(b) im Strahlengang des dritten Lichtbündels (26) zwichen Lichtquelle (14) und zweitem dichroitischen Filter (34) ein fünftes dichroitisches Filter (44) angeordnet ist, welches den langwelligen Wellenlängenbereich (40) durchläßt und den mittleren (38) und den Kurzwelligen Wellenlängenbereich reflektiert.

4. Lichtquellenanordnung nach einem der Ansprüche 1 bis 3, dadurch gekennzeichnet, daß auf der optischen Achse (28) des Scheinwerfers austrittsseitig von den Filtern (30, 32, 34) eine Blende (46) vorgesehen ist und die Lichtquellen (10, 12, 14) so gestaffelt angeordnet sind, daß die Lichtwege zwischen jeder der drei Lichtquellen (10, 12, 14) und der Blende (46) gleich sind.

5. Lichtquellenanordnung nach Anspruch 4, dadurch gekennzeichnet, daß zwischen den Filtern (30, 32, 34) und der Blende (46) eine Kondensorlinse (48) angeordnet ist.

6. Lichtquellenanordnung nach einem der Ansprüche 1 bis 5, dadurch gekennzeichnet, daß zur Erzeugung paralleler Lichtbündel (22, 24, 26) hinter jeder der Lichtquellen (10, 12, 14) ein Reflektor (16, 18, 20) angeordnet ist.

7. Lichtquellenanordnung nach einem der Ansprüche 1 bis 6, dadurch gekennzeichnet, daß jeder der Lichtquellen (10, 12, 14) ein Leistungssteuerteil (52, 54, 56) zur Regulierung der Lichtquellenheligkeit vorgeschaltet ist und daß der Leistungssteuerteil (52, 54, 56) jeweils von einem der Regler (70, 72, 74) gesteuert wird.

8. Lichtquellenanordnung nach Anspruch 3, dadurch gekennzeichnet, daß die photoelektrischen Fühler (66, 68) im Strahlengang des zweiten bzw. dritten Lichtbündels (24, 26) austrittsseitig von dem vierten bzw. fünften dichroitischen Filter (42, 44) angeordnet sind.

9. Lichtquellenanordnung nach Anspruch 7 oder 8, dadurch gekennzeichnet, daß die Sollwertgeber (82, 84, 86) zur Erzeugung der einstellbaren Sollwerte von einstellbaren Potentiometern gebildet sind, welche an einer gemeinsamen Speisespannung liegen, und daß die Speisespannung zur gemeinsamen Veränderung aller Sollwerte ihrerseits einstellbar ist.

10. Lichtquellenanordnung nach Anspruch 9, dadurch gekennzeichnet, daß die Speisespannung an einem einstellbaren Potentiometer (88) abgegriffen wird.

11. Lichtquellenanordnung nach einem der Ansprüche 1 bis 10, dadurch gekennzeichnet, daß mehrere Sätze (82, 84, 86, 88; 82', 84', 86', 88') von Sollwertgebern vorgesehen sind, daß an jedem Regler (70, 72, 74) parallel je ein Sollwertgeber von jedem dieser Sätze anliegt, und daß über Umschaltmittel (90, 90') wahlweise jeweils einer dieser Sätze von Sollwertgebern einschaltbar ist.

**Claims**

1. Light source arrangement in a spotlight for producing coloured light particularly in theater or studio lighting, whereby the colour of the light is continuously variable, in which

a) three superposed light beams (22, 24, 26) having a short-wave (blue), a medium (green) and a long-wave (red) wave length range are generated,

b) each of the light beams (22, 24, 26) emerges from an individual adjustable light source (10, 12, 14),

c) two dichroitic filters (32, 34) are provided for the superposition of the light beams (22, 24, 26),

$c_1$) which filters are dispoed inclined with respect to the beam axes and

$c_2$) the limit wave lengths of which filters correspond to the borderlines between the short-wave and the medium wave length ranges as well as to that between the medium and the long-wave wave length ranges, respectively, and

d) a first light beam (22) is transmitted through both of the dichroitic filters (32, 34), and the second and the third light beams (24, 26) are each reflected by one of the dichroitic filters (32 or 34, respectively), characterized in that

e) the light sources (10, 12, 14) are continuously emitting light,

f) the intensity of each of the light beams (22, 24, 26) is monitored by a photoelectric detector (64, 66, 68),

g) a regulator (70, 72, 74) is provided for the adjustment of each of the light sources (10, 12, 14), by means of which regulator the signal of the photoelectric detector (64, 66, 68) is compared to an adjustable desired value and the power of the light source (10, 12, 14) is adjusted as a function of the result of this comparison, and

h) the adjustable desired values of all light sources (10, 12, 14) are commonly variable in the same proportion to adjust of the total intensity of the exiting light beam.

2. Light source arrangement as set forth in claim 1, characterized in that

a) the front filter (34) as viewed from the lightened object only reflects the long-wave wave length range and the filter (32) disposed behind it reflects the medium (38) and the long-wave wave length range (40), and

b) the light beam (22, 22') transmitted through these two filters (32, 34) is reflected by a third dichroitic filter (30), which reflects the short-wave wave length range (36) only.

3. Light source arrangement as set forth in claim 2, characterized in that

a) a fourth dichroitic filter (42) is disposed in the path of rays of the second light beam (24) between light source (12) and first dichroitic filter (32), which fourth dichroitic filter transmits the medium (38) and the short-wave wave length ranges (36) and reflects the long-wave wave length range (40),

b) a fifth dichroitic filter (44) is disposed in the path of rays of the third light beam (26) between light source (14) and second dichroitic filter (34), which fifth dichroitic filter transmits the long-wave wave length range (40) and reflects the medium (38) and the short-wave wave length ranges (36).

4. Light source arrangement as set forth in anyone of claims 1 to 3, characterized in that a diaphragm (46) is provided on the exit sides of the filters (30, 32, 36), and that the light sources (10, 12, 14) are staggered such that the paths of the light between each of the three light sources (10, 12, 14) and the diaphragm (46) are of the same length.

5. Light source arrangement as set forth in claim 4, characterized in that a condenser lens (48) is disposed between the filters (30, 32, 34) and the diaphragm (46).

6. Light source device as set forth in anyone of claims 1 to 5, characterized in that for collimating the light beams (22, 24, 26) a reflector (16, 18, 20) is disposed behind each of the light sources (10, 12, 14) to form the light beams (22, 24, 26).

7. Light source arrangement as set forth in anyone of claims 1 to 6, characterized in

that a power controlling element (52, 54, 56) is connected in series with each of the light sources (10, 12, 14) for adjustment of the brightness of the light source and

that each of the power controlling elements (52, 54, 56) is controlled by one of the regulators (70, 72, 74).

8. Light source arrangement as set forth in claim 3, characterized in

that the photoelectric detectors (66, 68) are disposed in the path of rays of the second and third light beams (24, 26), respectively, on the exit sides of the fourth and fifth dichroitic filters (42, 44), respectively.

9. Light source arrangement as set forth in claim 7 or 8, characterized in

that set point adjuster (82, 84, 86) are formed by adjustable potentiometers for the generation of the adjustable set points, which set point adjusters are connected to a common supply voltage, and

that the supply voltage in turn is adjustable to commonly vary all set points.

10. Light source arrangement as set forth in claim 9, characterized in that the supply voltage is set at an adjustable potentiometer (88).

11. Light source arrangement as set forth in anyone of claims 1 to 10, characterized in

that a plurality of sets (82, 84, 86, 88; 82', 84', 86', 88') of set point adjusters are provided,

that one set point adjuster of each of these sets is parallelly connected to each of the regulators (70, 72, 74), and

that selectively always one of these sets of set point adjusters is to be connected in circuit by means of change-over means (90, 90').

## Revendications

1. Arrangement de sources lumineuses pourvu à un projecteur pour la production de lumière colorée, particulièrement en vue de l'éclairage d'un théâtre ou d'un studio, la couleur de la lumière étant continuement variable, dans lequel

a) trois faisceaux lumineux (22, 24, 26) superposés ayant une gamme d'ondes à ondes courtes (bleu), à ondes moyennes (vert) et à grandes ondes (rouge) sont produits,

b) chacun des faisceaux lumineux (22, 24, 26) est émis par une source lumineuse (10, 12, 14) individuelle et ajustable,

c) deux filtres dichroitiques (32, 34) sont pourvus en vue de la superposition des faisceaux lumineux (22, 24, 26),

$c_1$) disposés inclinés relativement à l'axe du faisceau et

$c_2$) dont les longueurs d'onde limites correspondent â la limite entre la gamme d'ondes à ondes courtes et à ondes moyennes de même qu'entre la gamma d'ondes à ondes moyennes et à grandes ondes, et

d) un premier faisceau lumineux (22) est transmis à travers les deux filtres dichroitiques (32, 34), et le deuxième et le troisième faisceau lumineux (24, 26) sont réflétés chacun par l'un des filtres dichroitiques (32 ou 34, respectivement), caractérisé en ce que

e) les sources lumineuses sont continuement luisant,

f) l'intensité de chacun des faisceaux lumineux (22, 24, 26) est surveillée par un détecteur photoélectrique (64, 66, 68),

g) un régulateur (70, 72, 74) est pourvu pour l'adjustement de chacune des sources lumineuses (10, 12, 14) par lequel le signal du détecteur photoélectrique (64, 66, 68) est comparé à une valeur de consigne ajustable, et par lequel la puissance de la source lumineuse (10, 12, 14) est ajustée en fonction du résultat de cette comparaison et

h) les valeurs de consigne ajustables de toutes les sources lumineuses (10, 12, 14) sont conjointement variables en proportions pareilles à l'ajustement de l'intensité totale du faisceau lumineux qui sort.

2. Arrangement de sources lumineuses conforme à la revendication 1, caractérisé en ce que

a) le filtre (34) avant vu de la part de l'object éclairé ne réflète que la gamma d'ondes à grandes ondes (40) et le filtre (32) en disposé derrière ne réflète que la gamme d'ondes à ondes moyennes (38) et à grandes ondes (40) et

b) le faisceau lumineux (22, 22') transmis à travers ces deux filtres (32, 34) est réflété par un troisième filtre (30) dichroitique ne réflétant que le gamme d'ondes à ondes courtes (36).

3. Arrangement de sources lumineuses conforme à la revendication 2, caractérisé en ce que

a) dans la trajectoire du rayon du deuxième faisceau lumineux (24) et entre la source lumineuse (12) et le premier filtre dichroitique (32) un quatrième filtre dichroitique (42) est disposé transmettant la gamme d'ondes à ondes moyennes (38) et à ondes courtes (36) et réflétant la gamme d'ondes à grandes ondes (40),

b) dans la trajectoire du rayon du troisième faisceau lumineux (26) et entre la source lumineuse (14) et le deuxième filtre dichroitique (34) un cinquième filtre dichroitique (44) est disposé transmettant la gamme d'ondes à grandes ondes (46) et réflétant la gamme d'ondes à ondes moyennes (38) et à ondes courtes (36).

4. Arrangement de sources lumineuses conforme à l'une des revendications 1 à 3, caractérisé en ce qu'un diaphragme (46) est pourvu disposé sur l'axe optique (28) du projecteur et aux côtés sortie des filtres (30, 32, 34), et en ce que les sources lumineuses (10, 12, 14) sont disposées échelonnément de sorte que les trajets lumineux entre chacune des trois sources lumineuses (10, 12, 14) et le diaphragme (46) sont pareils.

5. Arrangement de sources lumineuses conforme à la revendication 4, caractérisé en ce qu'une lentille condenseur (48) est disposée entre les filtres (30, 32, 34) et le diaphragme (46).

6. Arrangement de sources lumineuses conforme à l'une des revendications 1 à 5, caractérisé en ce qu'en vue de la production de faisceaux lumineux parallèles un réflecteur (16, 18, 20) est disposé derrière chacune des sources lumineuses (10, 12, 14).

7. Arrangement de sources lumineuses conforme à l'une des revendications 1 à 6, caractérisé en ce qu'en vue de l'ajustement de la luminosité de la source lumineuse un élément de commande de puissance (52, 54, 56) est monté en série à chacune des sources lumineuses (10, 12, 14) et que les éléments de commande de puissance (52, 54, 56) sont commandés chacun par l'un des régulateurs (70, 72, 74).

8. Arrangement de sources lumineuses conforme à la revendication 3, caractérisé en ce que les détecteurs photoélectriques (66, 68) sont disposés dans la trajectoire du rayon du deuxième et du troisième faisceau lumineux, respectivement (24, 26), et aux côtés sortie du quatrième et du cinquième filtre dichroitique, respectivement (42, 44).

9. Arrangement de sources lumineuses conforme à la revendication 7 ou 8, caractérise en ce que des ajusteurs de consigne (82, 84, 86) produisant les valeurs de consigne ajustables sont formés de potentiomètres ajustables alimentés par une tension d'alimentation commune, et que la tension d'alimentation est ajustable selon la variation commune de toutes les valeurs de consigne.

10. Arrangement de sources lumineuses conforme à la revendication 9, caractérisé en ce que la tension d'alimentation est prélevée à un potentiomètre (88) ajustable.

11. Arrangement de sources lumineuses conforme à l'une des revendications 1 à 10, caractérisé en ce que plusieurs lots (82, 84, 86, 88; 82', 84', 86', 88') d'ajusteurs de consigne sont pourvus, qu'un ajusteur de consigne de chacun de ces lots est appliqué parallélement à chacun des régulateurs (70, 72, 74), et que facultativement un de ces lots d'ajusteurs de consigne peut être mis sous tension au moyen de commutateur.

Fig. 1

0 008 639

Fig. 2

100%

Filter 32 (45°)

Wellenlänge

100%

Filter 42   (90°)

100%

Filter 44   (90°)

100%

Filter 30   (45°)

100%

Filter 34  (45°)

blau        grün      rot

-36 -       -38-      -40 -

Fig.3